# Europäisches Patentamt
# European Patent Office
# Office européen des brevets

(19)

(11) Numéro de publication: **0 170 576**
**B1**

(12) ## FASCICULE DE BREVET EUROPÉEN

(45) Date de publication du fascicule du brevet:
**13.09.89**

(51) Int. Cl.⁴: **G 01 D 5/26**

(21) Numéro de dépôt: **85401369.5**

(22) Date de dépôt: **05.07.85**

(54) **Perfectionnements aux dispositifs de réglage des lecteurs pour capteurs de position angulaire.**

(30) Priorité: **05.07.84 FR 8410688**

(43) Date de publication de la demande:
**05.02.86 Bulletin 86/6**

(45) Mention de la délivrance du brevet:
**13.09.89 Bulletin 89/37**

(84) Etats contractants désignés:
**AT BE CH DE GB IT LI LU NL SE**

(56) Documents cité:
**US-A-3 524 261**
**US-A-3 545 088**
**US-A-4 132 890**

(73) Titulaire: **M.C.B., 11, rue Pierre Lhomme, F-92400 Courbevoie (FR)**

(72) Inventeur: **Gambs, Paul, 21, Avenue Pasteur, F-92400 Courbevoie (FR)**
Inventeur: **Taillebois, Jacques, Résidence Brigitte 23, Rue des Ebisoires, F-78370 Plaisir (FR)**
Inventeur: **Rolland, Gérard, 23, Rue de la Paix, F-78800 Houilles (FR)**

(74) Mandataire: **Lecca, Jean, CABINET PLASSERAUD 84, rue d'Amsterdam, F-75009 Paris (FR)**

EP 0 170 576 B1

## Description

La présente invention concerne les capteurs de position angulaire et plus particulièrement les dispositifs de réglage en position des lecteurs pour de tels capteurs, qu'ils soient de type optique ou de type électrique.

Généralement les capteurs de position angulaire comportent un arbre mobile en rotation par rapport à un corps fixe servant de repère, l'arbre mobile portant un élément, tel qu'un disque, qui comporte en général plusieurs pistes circulaires concentriques codées présentant chacune des zones successives de transmission optique variable ou de conductivité électrique variable, selon un code prédéterminé; des moyens sont prévus pour exciter optiquement ou électriquement les pistes; on prévoit sur le corps fixe un ensemble de détecteurs, de type optique ou électrique, qui prélèvent chacun sur une des pistes une information résultant du code utilisé et permettant de définir sans ambiguité la position angulaire de l'axe mobile par rapport à un plan repère fixe passant par l'axe de l'arbre mobile.

L'ensemble des éléments détecteurs qui est porté sur un support commun constitue ce que l'on appelle généralement le lecteur du capteur de position angulaire. La disposition géométrique des éléments détecteurs sur leur support commun, en relation avec la disposition des pistes circulaires concentriques sur le disque mobile, définit un axe de rotation et un plan radial d'origine passant par cet axe de rotation. L'orientation exacte de ce plan est généralement arbitraire afin de permettre de modifier le calage angulaire des éléments détecteurs sur l'axe du capteur.

Par contre la cohérence de la mesure et l'obtention d'informations homogènes exigent, de manière impérative, que le plan d'origine défini par la position des capteurs sur leur support commun passe par l'axe géométrique de rotation du disque mobile, avec une précision qui limite la précision de l'information obtenue au moyen du capteur.

En outre il est nécessaire que les pistes circulaires soient concentriques à cet axe géométrique de rotation avec une précision qui détermine également la précision de l'information transmise par le capteur.

La présente invention a pour but de réaliser un dispositif de réglage de la position du lecteur qui amène le plan radial d'origine (plan de référence) à passer par l'axe de rotation géométrique du disque mobile qui porte les pistes, d'une part, et le plan des éléments détecteurs à être perpendiculaires à cet axe, d'autre part.

Le brevet USA-4 132 890 décrit un tachymètre dont l'assemblage fixe est constitué par un masque comportant une piste optique unique inscrite sur lui. Il comporte des moyens pour corriger la composante axiale du battement de l'arbre tournant au cours de sa rotation.

Par contre ce brevet n'apporte aucune solution au problème très délicat de positionnement du lecteur à plusieurs éléments détecteurs d'un capteur de la position angulaire d'un arbre tournant, ni à la synchronisation des signaux reçus par ces capteurs multiples sur un rayon concourant avec l'axe de rotation géométrique vrai de l'arbre tournant dont on se propose de mesurer la position angulaire dans un capteur de cette position.

On sait en effet qu'un tel capteur exige, d'une part, un positionnement avec une précision micrométrique du lecteur et, d'autre part, une synchronisation parfaite des signaux reçus par les capteurs multiples.

Il est difficile, sinon impossible, d'utiliser le dispositif selon le brevet USA-4 132 890 pour la lecture des codeurs optiques absolus, par exemple en code Gray, car les réglages radiaux et axiaux intégrés à de tels capteurs posent d'énormes difficultés étant donné qu'ils sont relatifs à de la haute résolution et/ou à des codeurs miniature.

On notera d'ailleurs que dans le brevet USA précité une grande importance est attribuée au réglage de l'entreverre, ce qui résulte du fait que le masque du lecteur est du type multifente, alors que la mise en oeuvre d'un code Gray demande un masque monofente.

Par ailleurs le brevet USA-3 524 261 décrit un appareil de mesure de l'excentricité avec une platine de centrage de construction relativement encombrante et qui ne peut fonctionner que dans une certaine orientation dans l'espace, du fait que c'est le poids d'une table qui maintient en place des billes se trouvant dans des logements sous la table.

Au contraire un capteur de position angulaire d'un arbre tournant dans la technique actuelle doit être de très petite dimension et fonctionner dans toutes les positions. En outre et surtout, les moyens de réglage du brevet USA-3 524 261 mettent en oeuvre une action par vis et une réaction par ressort avec possibilité de modification à tout moment. Au contraire l'invention vise à réaliser un capteur de la position angulaire d'un arbre tournant dans lequel on prévoit des moyens de réglage de la position du lecteur ne mettant pas en oeuvre de ressort mais uniquement des vis, notamment des vis de centrage agissant de manière antagoniste dans un plan sensiblement perpendiculaire à l'axe de rotation de l'arbre tournant, ces moyens de réglage n'étant plus disponibles au moment de l'utilisation du capteur.

Selon l'invention, un capteur de la position angulaire d'un arbre tournant dans un corps fixe comporte: un lecteur doté de plusieurs éléments détecteurs; et un dispositif de réglage de la position du lecteur, avec une platine de réglage, sur laquelle est fixé le lecteur, un disque portant une surface codée et solidaire en rotation dudit arbre tournant, le capteur étant caractérisé en ce qu'il comporte des moyens de déplacement radial de la platine par rapport au corps fixe du capteur constitués par des vis de centrage agissant, de manière antagoniste, dans un plan sensiblement perpendiculaire à l'axe de rotation de l'arbre tournant et du disque; le capteur comportant en outre une rondelle de même forme géométrique que la platine, ladite rondelle étant fixe radialement par rapport au corps fixe et en contact par une de ses faces avec la face de la platine sur laquelle n'est pas fixé le lecteur afin de faciliter le déplacement radial de cette platine au cours de son réglage.

De préférence le capteur comprend en outre des vis d'appui agissant sur la platine.

Selon un mode de réalisation préféré, la rondelle est interposée entre la platine et le corps fixe du capteur et les vis d'appui agissent sur la platine par l'intermédiaire de la rondelle, afin d'amener la rondelle et la platine à être parallèles au plan du disque portant la surface codée.

Avantageusement la platine de réglage a la forme d'une couronne annulaire entourant l'arbre tournant et le corps fixe du capteur comporte un rebord ou collerette qui entoure la platine précitée et sert d'appui ou de logement aux vis de centrage précitées.

Au lieu d'un tel rebord ou collerette, le corps fixe du capteur peut comporter une protubérance centrale entourant l'arbre tournant et qui est entourée par ladite platine et sert d'appui ou de logement aux vis de centrage qui traversent cette platine.

Les vis de centrage peuvent être prévues par paires, chaque paire comportant deux vis disposées vis-à-vis et agissant de manière antagoniste, par exemple quatre vis, ou bien on peut prévoir trois vis décalées angulairement à 120° l'une de l'autre.

Avantageusement on peut prévoir des vis de blocage de la platine agissant parallèlement à l'axe de rotation de l'arbre et du disque, ces vis de blocage traversant également la rondelle.

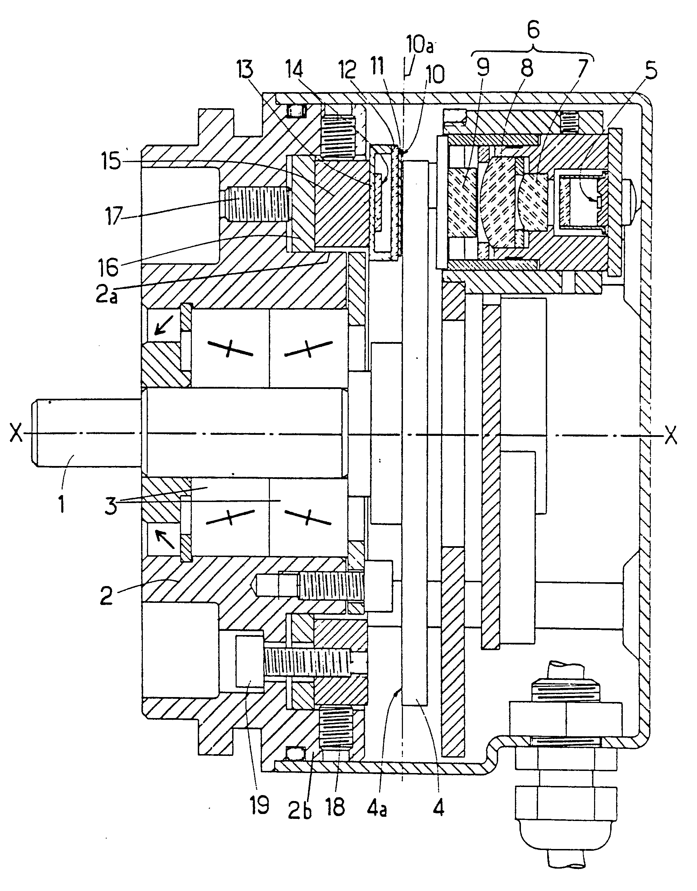

L'invention pourra, de toute façon, être bien comprise à l'aide du complément de description qui suit, ainsi que du dessin ci-annexé, lesquels compléments et dessin sont, bien entendu, donnés surtout à titre d'indication.

La figure unique représente, en coupe axiale, un mode de réalisation préféré d'un codeur optique de position angulaire mettant en oeuvre l'invention.

Selon l'invention et plus précisément selon celui de ses modes d'application, ainsi que selon ceux des modes de réalisation de ses diverses parties,auxquels il semble qu'il y ait lieu d'accorder la préférence, se proposant, par exemple, de réaliser un dispositif de réglage d'un lecteur pour capteur de position angulaire, on s'y prend comme suit ou d'une manière analogue.

Dans la description détaillée qui suit on se limite à un capteur de position angulaire de type optique, c'est-à-dire comportant plusieurs pistes circulaires concentriques sur chacune desquelles est prévue une succession de zones de transmission optique variable selon un code déterminé.

Le capteur de position angulaire illustré est destiné à déterminer la position angulaire d'un arbre 1 tournant dans un corps 2, grâce à des paliers ou roulements à bille 3, autour d'un axe géométrique XX.

L'arbre tournant 1 porte un disque en verre 4 sur lequel figure une surface codée 4a constituée par plusieurs pistes circulaires concentriques comportant chacune une succession de zones alternativement opaque et transparentes, les zones opaques interceptant et les zones transparentes laissant passer la lumière issue d'une source lumineuse 5 et traversant un système optique 6 constitué par trois systèmes optiques 7, 8, 9 constitués respectivement par un système transformateur de convergence, un système de collimation et un système concentrant la lumière sur les pistes concentriques de la surface 4a.

Un tel système optique 6 et des variantes de celui-ci sont décrits dans la demande de brevet européen EP-A-171 314 déposée ce même jour par la demanderesse et intitulée "Perfectionnements aux dispositifs de lecture pour capteurs optiques de position à plusieurs pistes codées".

Le système 9 qui concentre la lumière sur les pistes concentriques est avantageusement constitué (comme on le voit dans la demande de brevet précitée) par un demi-cylindre réfringent qui forme de la source de lumière 5 une image astigmate et anamorphosée sur la surface des éléments photosensibles d'une plaquette semi-conductrice 14 portée par un support 13 qui est fermé par une lame de verre 12 sur laquelle est fixée une autre lame de verre 11 qui porte un diaphragme 10 à plusieurs fenêtres dont l'espacement correspond à l'espacement des pistes de la surface 4a et des éléments photosensibles de la plaquette semi-conductrice 14 et dont l'alignement doit intercepter l'axe géométrique de rotation du disque 4.

Plus précisément le dispositif de lecture proprement dit est réalisé conformément à la demande de brevet précitée de la demanderesse; il comprend essentiellement, dans un boîtier 13 formant support, la plaquette semi-conductrice 14 sur laquelle ont été crées par diffusion $n$ éléments photosensibles constituant les détecteurs élémentaires affectés à la lecture optique des $n$ pistes de la surface 4a; ces détecteurs élémentaires sont disposés en correspondance des fenêtres transparentes du diaphragme 10 qui leur correspondent respectivement. Le diaphragme 10 à $n$ fenêtres est formé par une couche mince de métallisation déposée sur le support transparent 11 collé sur la lame de verre 12 gui est fixée en permanence par collage ou soudure sur le boîtier 13, et ceci conformément à la caractéristique essentielle de l'invention de la demande de brevet précitée.

L'ensemble 10, 11, 12,13, 14 constitue le lecteur proprement dit du capteur.

Ce lecteur est, conformément à la présente invention, fixé par collage sur une platine de réglage 15 en forme de couronne circulaire entourant l'arbre 1 et logé dans un creux annulaire 2a du corps 2. Le corps 2 forme, autour de ce creux, une collerette 2b percée de quatre trous taraudés dans lesquels sont logées quatre vis de centrage ou de poussée (18) servant au réglage radial de la position de la platine 15 sur le corps 2. Quatre vis de blocage 19 coopèrent avec les vis de poussée 18; au cours du réglage radial de la position de la platine 15, les vis de blocage 19 sont débloquées, mais maintenues assez voisines de leur position de blocage afin de limiter les déplacements parasites de la platine 15 si trois des quatre vis 18 étaient desserrées en même temps.

Derrière la platine 15 est disposée une rondelle 16, également en forme de couronne circulaire, qui est traversée par les vis de blocage 19, les dimensions de la rondelle 16 étant telles qu'elle puisse coulisser dans le creux annulaire 2a du corps 2 sans contrainte, mais sans jeu radial appréciable, et qu'elle puisse résister, sans déformation notable, à l'action antagoniste des vis de blocage 19 et de trois vis d'appui 17 agissant parallèlement à l'axe géométrique XX de l'arbre 1.

Le réglage de la position de la platine 15, et donc du support 13 avec la plaquette semi-conductrice 14 et les éléments 10, 11, 12, est effectué comme suit.

On positionne les vis 18 de réglage radial de manière arbitraire, de façon que la platine 15 soit centrée dans le corps 2 du capteur, puis on agit sur les vis d'appui 17 de manière que le plan 10a du diaphragme 10 soit exactement parallèle au plan d'appui du disque codé 4 qui n'est pas encore monté sur son axe; en même temps on règle la distance entre ces deux plans, distance qui conditionnera l'intervalle séparant la surface codée 4a du diaphragme 10. On procède ensuite à la mise en place du disque codé 4 sur son axe et on centre ce disque sur l'axe XX de l'arbre 1, de manière connue, afin que, lors de sa rotation, les pistes circulaires concentriques du code défilent devant les fenêtres du diaphragme 10 en restant parfaitement alignées avec elles. On centre le diaphragme en agissant sur les vis de centrage 18, de façon à déplacer le diaphragme derrière le disque codé 4,

- d'une part, tangentiellement de manière que l'alignement des fenêtres du diaphragme vienne coïncider avec un rayon du disque codé 4 (ce qui peut être vérifié, dans le cas d'un code Gray, par le fait que le changement d'état de la piste la plus significative, généralement la plus centrale, et le centre d'une plage de la piste la moins significative, généralement la plus externe, sont centrés en même temps dans les fenêtres du diaphragme qui leur correspondent respectivement);
- d'autre part, radialement, en amenant le centre des fenêtres du diaphragme à coïncider avec le rayon moyen des pistes du disque codé qui leur correspondent respectivement.

A partir d'une position d'équilibre supposée atteinte, l'action antagoniste des deux vis de centrage 18 appartenant à une même paire est constamment respectée si l'on prend soin de ne desserrer une vis que d'une quantité inférieure à celle qui lui ferait perdre le contact avec la platine 15 et de resserrer immédiatement la vis opposée de la même quantité. Pour limiter les efforts de cisaillement qui s'exercent sur les deux vis 18 qui n'interviennent pas à ce moment là, il convient de les desserrer toutes deux, chacune d'une quantité sensiblement égale à la moitié du desserrage effectué sur la première vis citée.

Une fois obtenu un centrage satisfaisant du diaphragme 10 derrière le disque codé 4, examiné à l'arrêt et en mouvement, comme décrit plus haut, les vis de blocage 19 sont bloquées énergiquement, sans que cela entraîne aucun déréglage.

Ce mode de répartition équilibrée des tension antagonistes exercées sur la platine 15 par les vis de centrage 18, les vis d'appui 17 et les vis de blocage 19 confère au réglage une grande stabilité à l'égard des vibrations et des variations de température, à condition toutefois, à l'égard de ces dernières, que le corps 2, la rondelle 16, la platine 15, les vis de centrage 18, les vis d'appui 17 et les vis de blocage 19 soient réalisés dans des métaux ou des alliages métalliques ayant même coefficient de dilatation.

**Revendications**

1. Capteur de la position angulaire d'un arbre (1) tournant dans un corps fixe (2), qui comporte: un lecteur (10, 11, 12, 13, 14) doté de plusieurs éléments détecteurs; et un dispositif de réglage de la position du lecteur, avec une platine de réglage (15), sur laquelle est fixé le lecteur, un disque (4) portant une surface codée (4a) et solidaire en rotation dudit arbre tournant, le capteur étant caractérisé en ce qu'il comporte des moyens de déplacement radial de la platine de réglage (15) par rapport au corps fixe (2) du capteur constitués par des vis de centrage (18) agissant, de manière antagoniste, dans un plan sensiblement perpendiculaire à l'axe (XX) de rotation de l'arbre tournant (1) et du disque (4); le capteur comportant en outre une rondelle (16) de même forme géométrique que la platine de réglage (15), ladite rondelle étant fixe radialement par rapport au corps fixe (2) et en contact par une de ses faces avec la face de la platine de réglage (15) sur laquelle n'est pas fixé le lecteur (10, 11, 12, 13, 14) afin de faciliter le déplacement radial de cette platine de réglage au cours de son réglage.

2. Capteur selon la revendication 1, caractérisé en ce qu'il comprend en outre des vis d'appui (17) agissant sur la platine de réglage (15).

3. Capteur selon l'ensemble des revendications 1 et 2, caractérisé en ce que ladite rondelle (16) est interposée entre la platine de réglage (15) et le corps fixe (2) du capteur et en ce que les vis d'appui (17) agissent sur la platine de réglage (15) par l'intermédiaire de la rondelle (16), afin d'amener la rondelle et la platine de réglage à être parallèles au plan du disque (4) portant la surface codée (4a).

4. Capteur selon l'une quelconque des revendications précédentes, caractérisé en ce que la platine de réglage (15) a la forme d'une couronne annulaire entourant l'arbre tournant (1) et en ce que le corps fixe (2) du capteur comporte un rebord ou collerette (2b) qui entoure la platine de réglage et sert d'appui ou de logement aux vis de centrage (18).

5. Capteur selon l'une quelconque des revendications 1 à 3, caractérisé en ce que le corps fixe (2) du capteur comporte une protubérance centrale entourant l'arbre tournant (1) et qui est entourée par ladite platine de réglage (15) et sert d'appui ou de logement aux vis de centrage (18) qui traversent cette platine de réglage.

6. Capteur selon l'une quelconque des revendications précédentes, caractérisé en ce qu'il comprend en outre des vis de blocage (19) de la platine de réglage (15) agissant parallèlement à l'axe (XX) de rotation de l'arbre (1) et du disque (4), ces vis de blocage traversant également la rondelle (16).

**Patentansprüche**

1. Drehwinkelpositionsmeßeinrichtung für eine in einem feststehenden Gehäuse (2) drehbare Welle (1) mit einem mit mehreren Detektorelementen versehenen Meßgeber (10, 11, 12, 13, 14) und einer Einrichtung zur Positionsregelung des Meßgebers mit einer Regelplatte (15), auf der der Meßgeber angeordnet ist, einer Scheibe (4), die eine kodierte Oberfläche (4a) trägt und drehfest mit der drehbaren Welle verbunden ist, dadurch gekennzeichnet, daß diese Mittel zur radialen Verschiebung der Regelplatte (15) im Verhältnis zum feststehenden Gehäuse (2) der Meßeinrichtung aufweist, die von Zentrierschauben (18) gebildet sind, welche in einer zur Rotationsachse (XX) der drehbaren Welle (1) und der Scheibe (4) genau senkrechten Ebene gegenläufig wirken, wobei die Meßeinrichtung außerdem eine Unterlegscheibe (16) derselben geometrischen Form wie die Regelplatte (15) aufweist, wobei die Unterlegscheibe im Verhältnis zum feststehenden Gehäuse (2) radial festgelegt ist und mittels einer seiner beiden Oberflächen mit der Oberfläche der Regelplatte (15) in Kontakt steht, auf der der Meßgeber (10, 11, 12, 13, 14) nicht festgelegt ist, um die radiale Verschiebung der Regelplatte während der Regelung zu erleichtern.

2. Meßeinrichtung nach Anspruch 1, dadurch gekennzeichnet, daß diese außerdem auf die Regelplatte (15) einwirkende Stützschrauben (17) aufweist.

3. Meßeinrichtung nach Anspruch 1 und 2, dadurch gekennzeichnet, daß die Unterlegscheibe (16) zwischen der Regelplatte (15) und dem feststehenden Gehäuse (2) der Meßeinrichtung angeordnet ist und daß die Stützschrauben (17) durch Zwischenschaltung der Unterlegscheibe (16) auf die Regelplatte (15) einwirken, um eine parallele Ausrichtung der Unterlegscheibe und der Regelplatte in der Ebene der die kodierte Oberfläche (4a) tragenden Scheibe (4) einzustellen.

4. Meßeinrichtung nach einem der vorangehenden Ansprüche, dadurch gekennzeichnet, daß die Regelplatte (15) die Form eines die drehbare Welle (1) umgebenden Kreisringes aufweist und daß das feststehende Gehäuse (2) der Meßeinrichtung einen Rand oder Kragen (2b) aufweist, der die Regelplatte umgibt und als Stütze oder Lagerung für die Zentrierschrauben (18) dient.

5. Meßeinrichtung nach einem der Ansprüche 1 bis 3, dadurch gekennzeichnet, daß das feststehende Gehäuse (2) der Meßeinrichtung eine zentrale Ausstülpung aufweist, die die drehbare Welle (1) umgibt, von der Regelplatte (15) umgeben ist und als Stütze oder Lagerung für die Zentrierschrauben (18) dient, die diese Regelplatte durchdringen.

6. Meßeinrichtung nach einem der vorangehenden Ansprüche, dadurch gekennzeichnet, daß diese außerdem Blockierschrauben (19) für die Regelplatte (15) aufweist, die parallel zur Rotationsachse (XX) der Welle (1) und der Scheibe (4) wirken, wobei die Blockierschrauben die Unterlegscheibe (16) gleichmäßig durchdringen.

**Claims**

1. A pick-up for the angular position of a shaft (1) rotating in a stationary body (2) and comprising: a reader (10, 11, 12, 13, 14) equipped with a number of detecting elements, and also comprising a device for adjusting the position of the reader and comprising an adjusting plate (15) on which the reader is secured, and a disc (4) bearing a coded surface (4a) and co-rotatably secured to the rotating shaft, the pick-up being characterised in that it comprises means for radially moving the adjusting plate (15) relative to the stationary body (2) of the pick-up and comprising centring screws (18) acting in opposing manner in a plane substantially perpendicular to the axis (XX) of rotation of the rotating shaft (1) and the disc (4), the pick-up also comprising a washer (16) having the same geometrical shape as the adjusting plate (15), the washer being radially secured with respect to the stationary body (2) and with one of its surfaces in contact with that surface of the adjusting plate (15) to which the reader (10, 11, 12, 13, 14) is not secured, in order to facilitate radial movement of the adjusting plate during adjustment thereof.

2. A pick-up according to claim 1, characterised in that it also comprises bearing screws (17) acting on the adjusting plate (15).

3. A pick-up according to claims 1 and 2, characterised in that the washer (16) is disposed between the adjusting plate (15) and the stationary pick-up body (2) and the bearing screws (17) act on the adjusting plate (15) via the washer (16), in order to move the washer and the adjusting plate parallel to the plane of the disc (4) bearing the coded surface (4a).

4. A pick-up according to any of the preceding claims, characterised in that the adjusting plate (15) is a ring surrounding the rotating shaft (1) and the stationary pick-up body (2) has a flange or collar (2b) which surrounds the adjusting plate and serves as a bearing or recess for the centring screws (18).

5. A pick-up according to any of claims 1 to 3, characterised in that the stationary pick-up body (2) has a central protuberance surrounding the rotating shaft (1) and surrounded by the adjusting plate (15) and serving as a bearing or recess for the centring screws (18) which extend through the adjusting plate.

6. A pick-up according to any of the preceding claims, characterised in that it also comprises screws (19) for locking the adjusting plate (15) and acting parallel to the axis (XX) of rotation of the shaft (1) and the disc (4), the locking screws also extending through the washer (16).